Europäisches Patentamt

(19) European Patent Office

Office européen des brevets

(11) Publication number: **0 296 737 B1**

# EUROPEAN PATENT SPECIFICATION

(45) Date of publication of patent specification :
18.12.91 Bulletin 91/51

(51) Int. Cl.⁵ : **G01T 1/00, G01T 1/20**

(21) Application number : **88305271.4**

(22) Date of filing : **09.06.88**

(54) X-ray radiation sensor.

(30) Priority : **15.06.87 JP 148250/87**

(43) Date of publication of application :
**28.12.88 Bulletin 88/52**

(45) Publication of the grant of the patent :
**18.12.91 Bulletin 91/51**

(84) Designated Contracting States :
**DE FR GB**

(56) References cited :
**PATENT ABSTRACTS OF JAPAN, vol. 8, no. 252 (P-314)[1689], 17th November 1984 & JP-A-59 122 988 (SHIMAZU SEISAKUSHO K.K.) 16-07-1984
PATENT ABSTRACTS OF JAPAN, vol. 6, no. 125 (P-127)[1003], 10th July 1982 & JP-A-57 50 674 (TOKYO SHIBAURA DENKI K.K.) 25-03-1982
PATENT ABSTRACTS OF JAPAN, vol. 7, no. 168 (P-212)[1313], 23rd July 1983 & JP-A-58 75 083 (TOKYO SHIBAURA DENKI K.K.) 06-05-1983**

(73) Proprietor : **SEIKO INSTRUMENTS INC.
31-1, Kameido 6-chome Koto-ku
Tokyo 136 (JP)**

(72) Inventor : **Suzuki, Hiroyuki
31-1, Kameido, 6-chome
Koto-ku Tokyo (JP)**
Inventor : **Tamura, Kouichi
31-1, Kameido, 6-chome
Koto-ku Tokyo (JP)**
Inventor : **Sato, Tadashi
31-1, Kameido, 6-chome
Koto-ku Tokyo (JP)**
Inventor : **Nakajima, Kunio
31-1, Kameido, 6-chome
Koto-ku Tokyo (JP)**

(74) Representative : **Miller, Joseph et al
J. MILLER & CO. Lincoln House 296-302 High Holborn
London WC1V 7JH (GB)**

EP 0 296 737 B1

## Description

The present invention relates to an X-ray radiation sensor.

An X-ray radiation sensor is known to the Applicants which comprises a fibre optic plate ; a phosphor screen which converts an X-ray image into a light image ; and an image sensing device, such as a solid-state image sensing device or a pick-up tube. The phosphor screen is formed on the X-ray incidence side of the fibre optic plate. The image sensing device is connected to the phosphor screen by way of the fibre optic plate.

It has been proposed that the fibre optic plate of the sensor known to the Applicants should be composed of flint glass, the fibre-optic plate being optically bonded on the input side of the solid-state image sensing device, and the phosphor screen being formed on the fibre optic plate.

In such a sensor X-rays are partly absorbed while being transmitted through the fibre optic plate, the fibre optic plate is browned or discoloured by the X-rays and light generated in the phosphor screen is absorbed in the fibre optic plate. This results in the deterioration of detection sensitivity. Moreover, the X-rays transmitted through the fibre optic plate enter the solid state image sensing device, which results in the increase of noise.

In Patent Abstracts of Japan, Vol. 8, No. 252 (P-314) [1689], 17th November 1984 there is disclosed an X-ray radiation sensor comprising a plate formed of a plurality of light-transmitting members ; light-emitting means on an X-ray incidence side of the plate for converting X-rays into visible light ; and a sensing device, disposed on the opposite side of the plate, for sensing the said visible light.

In Patent Abstracts of Japan, Vol. 6, No. 125 (P-127) [1003], 10th July 1982 there is disclosed a radiation detector having collimator plates formed of a material having large blocking ability to radiations and small attenuation ability to light, for example, lead glass.

In Patent Abstracts of Japan, Vol 7, No. 168 (P-212) [1313], 23rd July 1983 there is disclosed a radiation detector which employs optical fibres whose ends have been polished or cut obliquely to improve light gathering efficiency.

According, therefore, to the present invention, there is provided an X-ray radiation sensor comprising a plate formed of a plurality of light-transmitting members ; light-emitting means on an X-ray incidence side of the plate for converting X-rays into visible light ; and a sensing device, disposed on the opposite side of the plate, for sensing the said visible light characterised in that each of the light-transmitting members comprises a fibre-optic member whose core employs radiation shielding glass comprising cerium dioxide, and that said light-emitting means is a phosphor screen.

The invention enables an improved X-ray radiation sensor to be provided which has an excellent resistance to X-rays. It also enables the X-ray radiation sensor to be of small size and low noise.

The radiation shielding glass may contain at least one compound of an element having an atomic number of at least 55 and may contain 0.2 to 1.8 wt% of cerium dioxide. Moreover, the said compound may be lead oxide, barium oxide or lanthanum oxide.

In one form of the invention, at least a portion of the optical axis of the plate is inclined to the phosphor screen.

The invention is illustrated, merely by way of example in the accompanying drawings, in which :

Figures 1 and 2 are sectional views of first and second embodiments respectively of an X-ray radiation sensor according to the present invention, and

Figure 3 is an expanded view of the circled portion of Figure 2.

In each of the said first and second embodiments, there is provided an X-ray radiation sensor comprising a plate 2 formed of a plurality of fibre optic members, a phosphor screen formed on an X-ray incidence side 2a of the plate 2, and a solid state sensing device 3 connected to the opposite side 2b of the plate 2.

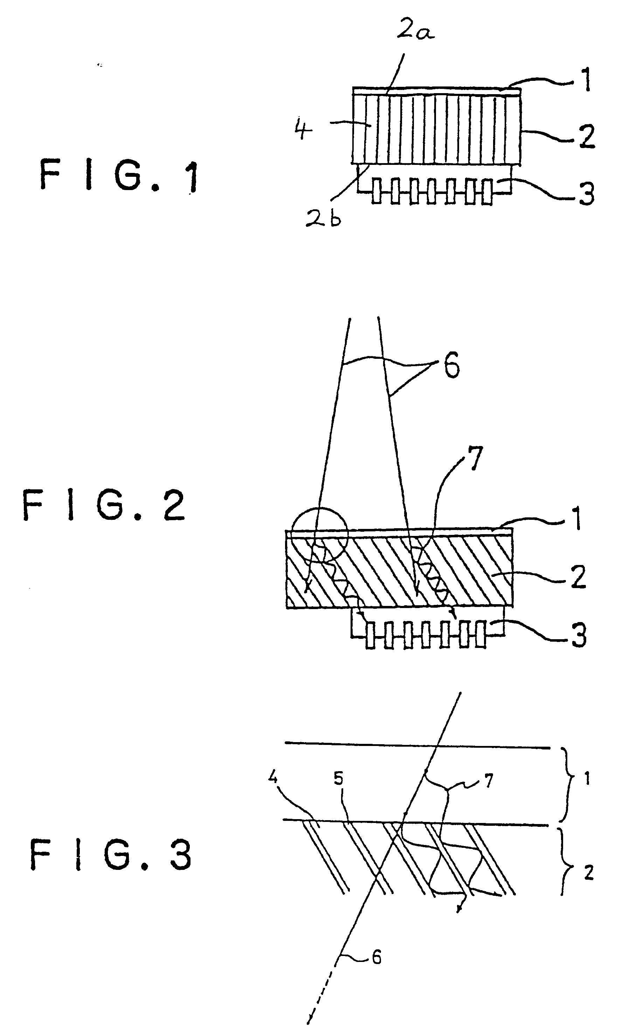

The fibre optic members of the plate 2 use radiation shielding glass as a core material, the radiation shielding glass comprising cerium oxide and at least one compound of an element having a high atomic number, i.e. a number of 55 or above. The said compound may be lead oxide, barium oxide, or lanthanum oxide. The core glass material has a large attenuation coefficient with respect to the X-rays and an excellent resistance to X-ray browning, so that the plate 2 can act as a shield for X-rays incident on the sensing device 3. The X-ray radiation sensor of Figures 1 and 2 which utilises such a plate 2 can prevent X-ray radiation damage of the sensing device 3, can prevent the increase of noise, and can prevent the browning of the plate 2, with the result that an X-ray radiation sensor of small size, long life and low noise can be obtained.

In the above-described construction the phosphor screen 1 first converts X-rays 6 into light 7. Then the plate 2 transmits an optical image onto the input side of the solid-state sensing device 3 and this device transduces the optical image into an electrical signal. Although the X-rays 6 are transmitted through the phosphor screen 1, since they have large transmittance, they are absorbed in the core glass to a large degree, because the core glass has cerium oxide added thereto and has a large content of compounds of the said high atomic number elements.

Cerium oxide acts to prevent browning by the X-rays 6, thus preventing the deterioration of the sensitivity of detecting X-rays 6. In addition, the said high atomic number elements inclusive of cerium act to absorb X-rays 6 to a large degree.

Accordingly, the X-rays 6 scarcely enter the solid-state sensing device 3, and thus increased noise and X-ray radiation damage can be prevented.

The present invention will now be described in detail with reference to the following examples.

## EXAMPLE 1

In the embodiment of Figure 1, a phosphor screen 1 of zinc sulphide or the like is formed on the X-ray incidence side of a plate 2 which is formed of a plurality of fibre optic members, the latter comprising core glass and cladding glass. A solid-state sensing device 3 is bonded to the other side of the plate 2.

The plate 2 is about 5 to 10 mm thick, and it can be used for X-rays of 100 kv or less. The solid-state sensing device 3 and the plate 2 may also be connected together optically by using a matching oil.

The composition of the core glass of the plate 2 is shown in Table 1.

### Table 1
#### Composition of core glass

| Components | PbO | $CeO_2$ | $Na_2O$ | $K_2O$ | $SiO_2$ |
|---|---|---|---|---|---|
| wt% | 40 | 1.7 | 8 | 5.1 | 45.2 |

The composition of the cladding glass of the plate 2 is shown in Table 2.

### Table 2
#### Composition of cladding glass

| Components | $SiO_2$ | $Na_2O$ | $A\ell_2O_3$ | CaO | MgO |
|---|---|---|---|---|---|
| wt % | 72 | 15 | 1 | 9 | 3 |

The prevention of browning by the X-rays is not increased when the content of added cerium dioxide exceeds 1.8 wt% (see Optical Technique Handbook, Asakurashoten, p 566, 1975). If the content of lead oxide as a component of the core glass is increased, the capability of the glass absorbing X-rays is increased, but the browning by X-rays is also increased, which results in the deterioration of the X-ray detection sensitivity. The present composition can be used in the range up to $10^8R$. Barium oxide, lanthanum oxide etc. may be used as radiation shielding components, instead of lead oxide, and one or two kinds or more of such compounds may be used.

## Example 2

Figure 2 illustrates a modified embodiment of the invention. The X-ray radiation sensor was prepared in accordance with Example 1 except that the plate 2 was provided with an optical path inclined to the normal axis of the phosphor screen 1. In the present embodiment, the optical path of the plate 2 is inclined by about 35 degrees to the normal axis of the input side of the phosphor screen 1.

Figure 3 is an enlarged view of the circled portion of Figure 2. The plate 2 is shown as comprising core material 4 through which the light 7 passes and cladding material 5. The diameter of each core member is about 25 microns, the thickness of the cladding is about 5 microns, and the thickness of the phosphor screen 1 is about 20 microns. By inclining the optical axis of the plate 2 to the phosphor screen 1, the dose of X-rays 6 transmitted through the plate 2 can be reduced. The cladding 5 transmits X-rays. However, since the optical path of the plate 2 is at an angle to the normal axis of the phosphor screen 1, the X-rays are absorbed to a large degree in the core material 4 instead of being transmitted only through the cladding 5. The X-ray radiation sensor can be used for X-rays of at least 100 KV.

The refractive index of the cladding glass needs to be smaller than that of the core glass in accordance with the principle of an optical fibre, and the said refractive index is increased when such a high atomic number element as lead or barium, for instance, is contained. Accordingly, it is difficult to give the cladding glass a large X-ray absorbing capability, and when X-rays are incident in the direction of the optical path of the plate 2, they are transmitted through the cladding 5 and enter the solid-state sensing device 3. On the other hand, when the plate 2 and the phosphor screen 1 are arranged so that at least a portion of the optical axis of the plate 2 is inclined to the phosphor screen 1, the X-rays scarcely enter the solid-state sensing device 3.

It is apparent, in the present embodiment, that X-rays cannot be transmitted only through the cladding 5, since the cladding is about 5 microns thick and is inclined at an angle of 35 degrees, and since the plate 2 is 5 to 10 mm thick.

In the case of an X-ray radiation sensor in which the phosphor screen 1 converts an X-ray image into a light image and is coupled optically to a sensing device 3 such as a pick-up tube or a solid-state image sensing device by way of a plate 2 interposed therebetween, the present invention makes it possible to make the X-ray radiation sensor of small size, long life and low noise, as described above, by reason of using radiation shielding glass comprising cerium dioxide as a core material so as to shield said plate from radiation including X-rays. This prevents browning and enables long life and high sensitivity to be obtained. Furthermore, by arranging that the optical path of the plate 2 is inclined to the normal axis of the phosphor screen 1, X-ray radiation damage of the solid-state sensing device and increase of noise can be prevented.

## Claims

1. An X-ray radiation sensor comprising a plate (2) formed of a plurality of light-transmitting members (4, 5) ; light-emitting means (1) on an X-ray incidence side (2a) of the plate (2) for converting X-rays into visible light ; and a sensing device (3), disposed on the opposite side (2b) of the plate (2) for sensing the said visible light characterised in that each of the light-transmitting members comprises a fibre optic member whose core (4) employs radiation shielding glass comprising cerium dioxide, and that said light-emitting means (1) is a phosphor screen.

2. A sensor as claimed in claim 1 characterised in that the radiation shielding glass (4) contains at least one compound of an element having an atomic number of at least 55.

3. A sensor as claimed in claim 2, characterised in that the compound is lead oxide, barium oxide or lanthanum oxide.

4. A sensor as claimed in any preceding claim characterised in that the radiation shielding glass contains 0.2 to 1.8 wt% of cerium dioxide.

5. A sensor as claimed in any preceding claim characterised in that at least a portion of the optical axis of the plate (2) is inclined to the phosphor screen (1).

## Patentansprüche

1. Röntgenstrahlungssensor mit einer aus einer Vielzahl von lichtübertragenden Elementen (4, 5) gebildeten Platte (2), einer lichtemittierenden Anordnung (1) auf der Röntgenstrahlungs-Auftreffseite (2a) der Platte (2) zur Umsetzung von Röntgenstrahlen in sichtbares Licht und mit einer auf der entgegengesetzten Seite (2b) der Platte (2) angeordneten Sensoranordnung (3) zur Erfassung des sichtbaren Lichtes, **dadurch gekennzeichnet,** daß die lichtübertragenden Elemente jeweils durch ein Faseroptikelement gebildet sind, dessen Kern (4) durch Strahlung schimendes Glas aus Zerdioxid gebildet ist und daß die lichtemittierende Anordnung (1) ein Phosphor-Schirm ist.

2. Sensor nach Anspruch 1, **dadurch gekennzeichnet,** daß das strahlungsschirmende Glas (4) wenigstens eine Verbindung eines Elementes mit einer Atomzahl von wenigstens 55 enthält.

3. Sensor nach Anspruch 2, **dadurch gekennzeichnet,** daß die Verbindung Bleioxid, Barriumoxid oder Lanthanoxid ist.

4. S    sor nach den vorhergehenden Ansprüchen, **dadurch gekennzeichnet,** daß das strahlungsschirmende    0,2 bis 1,8 Gew.-% Zerdioxid enthält.

5. S   sor nach den vor  rgehenden Ansprüchen, **dadurch gekennzeichnet,** daß wenigstens ein Teil der optischen Achse der Platte (2) gegen den Phosphor-Schirm (1) geneigt ist.

EP 0 296 737 B1

**Revendications**

1. Un capteur de rayonnement pour rayons X, comprenant une plaque (2) formée par un ensemble d'éléments de transmission de lumière (4, 5) ; des moyens d'émission de lumière (1) sur une face d'entrée de rayons X (2a) de la plaque (2), qui sont destinés à convertir des rayons X en lumière visible ; et un dispositif de détection (3), placé sur la face opposée (2b) de la plaque (2), pour détecter la lumière visible précitée, caractérisé en ce que chacun des éléments de transmission de lumière consiste en un élément à fibre optique dont le coeur (4) utilise un verre qui constitue un blindage vis-à-vis du rayonnement et qui contient du dioxyde de cérium, et en ce que les moyens d'émission de lumière (1) consistent en un écran à luminophores.

2. Un capteur selon la revendication 1, caractérisé en ce que le verre de blindage vis-à-vis du rayonnement (4) contient au moins un composé d'un élément ayant un numéro atomique au moins égal à 55.

3. Un capteur selon la revendication 2, caractérisé en ce que le composé précité est de l'oxyde de plomb, de l'oxyde de baryum ou de l'oxyde de lanthane.

4. Un capteur selon l'une quelconque des revendications précédentes, caractérisé en ce que le verre de blindage vis-à-vis du rayonnement contient de 0,2 à 1,8% en masse de dioxyde de cérium.

5. Un capteur selon l'une quelconque des revendications précédentes, caractérisé en ce qu'au moins une partie de l'axe optique de la plaque (2) est inclinée par rapport à l'écran à luminophores (1).

5

F I G. 1

F I G. 2

F I G. 3